# EUROPÄISCHE PATENTSCHRIFT

(11) **EP 3 153 940 B1**
(45) Veröffentlichungstag und Bekanntmachung des Hinweises auf die Patenterteilung: **11.04.2018**
(21) Anmeldenummer: 16190746.4
(22) Anmeldetag: 27.09.2016
(51) Int. Cl.: G05D 1/02

(54) **VERFAHREN UND STEUERUNGSVORRICHTUNG ZUR STEUERUNG EINES FAHRZEUGES**
APPARATUS AND METHOD FOR CONTROLLING A VEHICLE
DISPOSITIF ET MÉTHODE POUR CONTRÔLE UN VÉHICULE

(30) Priorität: 07.10.2015 DE 102015219439
(43) Veröffentlichungstag der Anmeldung: 12.04.2017
(73) Patentinhaber: Deutsche Bahn AG, 10785 Berlin (DE)
(72) Erfinder: Rode, Oliver, 60598 Frankfurt (DE)

(56) Entgegenhaltungen:
- EP-A1- 2 100 778
- DE-A1-102011 111 051
- DE-A1-102012 208 132
- US-A1- 2015 185 735

## Beschreibung

Die Erfindung betrifft ein Verfahren zur Steuerung eines Fahrzeuges, welches mit einer digitalen Kamera und einem optischen Bildverarbeitungssystem ausgestattet ist, wobei das optische Bildverarbeitungssystem zur Erfassung und Auswertung eines auf einer zweidimensionalen Trägerebene aufgebrachten maschinenlesbaren Codes eingerichtet ist, sowie eine Steuerungsvorrichtung eines Fahrzeuges, umfassend eine digitale Kamera und ein optisches Bildverarbeitungssystem, welches zur Erfassung und Auswertung eines auf einer zweidimensionalen Trägerebene aufgebrachten maschinenlesbaren Codes eingerichtet ist.

In der jüngeren Vergangenheit der Fahrzeugtechnik hat sich die Verwendung von Sensoren unterschiedlichster physikalischer Wirkungsprinzipien und für eine Vielzahl von Zwecken durchgesetzt. Insbesondere auf dem Gebiet des autonomen Fahrens kommt der fahrzeuggebundenen Sensorik eine sehr große Bedeutung zu. Hierbei kommen auch bildverarbeitende Systeme mit Kameras zum Einsatz, die zum Auslesen maschinenlesbarer Codes, z.B. in Form eines QR-Codes, eingerichtet sind.

Aus der DE 10 2013 222 092 A1 ist ein Verfahren bekannt, bei dem eine fahrzeugbasierte Digitalkamera maschinenlesbare Codes, die im räumlichen Umfeld des Fahrzeuges angebracht sind, abscannt und die hierbei aus dem Code ausgelesenen Nutzinformationen zur Aktivierung oder Steuerung von Funktionen auf dem Fahrzeug verwendet werden. Auf diese Weise ist es möglich, Fahrzeuganwendungen durch maschinenlesbare Codes auszulösen. So kann beispielsweise ein elektrisch betriebenes Fahrzeug die Identität einer Ladestation aus einem an der Ladestation angebrachten QR-Code auslesen und in ein Verfahren zur Freischaltung des Fahrzeuges an der Ladestation integrieren bzw. weiterverarbeiten. Allerdings wird hierbei vorausgesetzt, dass das Fahrzeug mit seiner darin verbauten Kamera in einer geeigneten Position in Bezug auf den zu scannenden Code ausgerichtet ist. Das Fahrzeug muss also zunächst durch den Fahrzeugbediener in eine Position gebracht werden, aus der heraus der maschinenlesbare zweidimensionale Code durch die Kamera des Fahrzeuges hinreichend verzerrungsfrei lesbar ist. Sobald der Abstand zwischen der Trägerebene des Codes und der Kamera zu groß ist oder die optische Achse der Kamera in einem flachen Winkel auf die Trägerebene trifft, ist der zweidimensionale Code wegen des begrenzten Auflösungsvermögens der Kamera nicht mehr durch die Fahrzeugkamera auslesbar. Somit versagen in solchen Konstellationen die üblichen Bildverarbeitungsverfahren. Zur Überwindung dieser Problematik muss das Fahrzeug von dessen Bediener solange manuell in Bezug auf den zweidimensionalen Code manövriert bzw. rangiert werden, bis dieser durch die Fahrzeugkamera störungsfrei ausgelesen werden kann. Dies ist zeitaufwändig und störungsanfällig.

Die WO 2012/154208 A1 offenbart ein Verfahren zum Umschalten eines Fahrzeuges von einem manuellen Betriebsmodus in einen autonomen Betriebsmodus, bei dem das Fahrzeug zunächst mittels einer ersten Sensorik einen sog. "Landestreifen" detektiert, über den es dann durch den Fahrzeugbediener an einen in Form eines maschinenlesbaren Codes ausgeführten Bezugsindikator herangeführt wird. Von diesem Bezugsindikator aus ist dann der Start des Fahrzeuges im autonomen Betriebsmodus vorgesehen. Der Landestreifen kann beispielsweise in Form von Pfeilen oder Markierungen ausgeführt sein, die den Fahrzeugbediener den Weg zum Bezugsindikator weisen. Allerdings wird das Fahrzeug im Bereich des "Landestreifens" nach wie vor durch einen menschlichen Bediener geführt; das sensorgestützte Auffinden des Landestreifens stellt somit lediglich eine Assistenzfunktion für den menschlichen Bediener beim Ansteuern des Referenzindikators dar. Zudem setzt dieses Verfahren die physische Existenz eines zusätzlichen "Landestreifens" voraus, was in vielerlei Hinsicht aufwändig ist. Im Zusammenhang mit Referenzindikatoren, die keinen solchen "Landestreifen" in ihrem räumlichen Umfeld aufweisen, ist dieses Verfahren nicht anwendbar.

Das Auslesen maschinenlesbaren Codes mittels optischer Bildverarbeitungssysteme unterliegt also engen Randbedingungen an die relative Positionierung von Fahrzeug und Code zueinander und führt somit zu weitreichenden Einschränkungen im Betrieb autonomer Fahrzeuge.

Der Erfindung liegt daher die Aufgabe zugrunde, ein Verfahren zur Steuerung eines Fahrzeuges, welches mit einem optischen Bildverarbeitungssystem ausgestattet ist, wobei das optische Bildverarbeitungssystem zur Erfassung und Auswertung eines auf einer zweidimensionalen Trägerebene aufgebrachten maschinenlesbaren Codes eingerichtet ist, sowie eine Steuerungsvorrichtung eines Fahrzeuges, umfassend ein optisches Bildverarbeitungssystem, welches zur Erfassung und Auswertung eines auf einer zweidimensionalen Trägerebene aufgebrachten maschinenlesbaren Codes eingerichtet ist, bereitzustellen, welche diese Nachteile des Standes der Technik überwindet. Insbesondere sollen die Möglichkeiten zur Interaktion eines in einem autonomen Modus betriebenen Fahrzeuges mit maschinenlesbaren Codes, die im räumlichen Umfeld eines solchen Fahrzeugs angeordnet sind und deren codierter Inhalt mittels optischer Bildverarbeitungssysteme auslesbar ist, verbessert und damit die Einsatzmöglichkeiten autonomer Fahrzeuge erweitert werden.

Erfindungsgemäß wird diese Aufgabe in verfahrensorientierter Weise in Verbindung mit dem Oberbegriff des Patentanspruches 1 dadurch gelöst, dass in einem ersten Verfahrensschritt aus den von der digitalen Kamera (101) erfassten Bildern des Codes mittels eines Bildverarbeitungssystems die dreidimensionale räumliche Lage der Trägerebene des Codes in Bezug auf das Fahrzeug ermittelt wird, und hierauf basierend in einem zweiten Verfahrensschritt durch eine mit dem Bildverarbeitungssystem in Verbindung stehende Steuereinheit Steuergrößen zur Navigation des Fahrzeuges in Richtung auf den Code ermittelt werden.
Diese Steuergrößen werden in Abhängigkeit der im ersten Verfahrensschritt ermittelten relativen räumlichen Lage und Ausrichtung des Fahrzeuges in Bezug auf die Trägerebene des Codes bestimmt. Sie werden dabei so berechnet, dass das Bildverarbeitungssystem des Fahrzeuges nach Durchführung des auf diesen Steuergrößen basierenden Bewegungsvorgangs des Fahrzeuges derart zur Trägerebene des Codes ausgerichtet ist, dass eine hinreichend verzerrungsfreie und scharfe optische zweidimensionale Erfassung des Codes möglich ist. Unter "Code" ist in diesem Zusammenhang jegliche optoelektronisch lesbare Schrift bzw. Signatur zu verstehen, die aus verschieden breiten Strichen oder Punkten und dazwischenliegenden Lücken mit möglichst hohem Kontrast bestehen. Solche Codes sind in verschiedensten Ausprägungen aus dem Stand der Technik vorbekannt.
Das Fahrzeug ermittelt somit in autonomer Weise die in Bezug auf den auszulesenden Code einzunehmende Positionierung und Ausrichtung, so dass dessen codierter Inhalt mittels herkömmlichen Bildverarbeitungssystemen auslesbar und auswertbar ist. Auf diese Weise wird die autonome Durchführung von Navigationsvorgängen eines Fahrzeugs zu Zielobjekten ermöglicht, auf denen ein solcher Code aufgebracht ist. Es ist insbesondere keine Mitwirkung eines menschlichen Fahrzeugbedieners erforderlich, der das Fahrzeug in eine Position manövriert, die eine hinreichend verzerrungsfreie Kameraaufnahme des Codes ermöglicht. Unter Anwendung des erfindungsgemäßen Verfahrens bzw. bei Realisierung einer erfindungsgemäßen Steuervorrichtung kann also das Wahrnehmungsfeld eines Fahrzeuges im autonomen Betriebsmodus deutlich erweitert werden, da es nunmehr ausreicht, wenn die Fahrzeugsteuerung ein im seinem räumlichen Umfeld angeordnetes Objekt als möglichen Code erkennt, ohne diesen in dieser Position schon tatsächlich lesen zu können. Erfindungsgemäß vermisst die Fahrzeugsteuerung die räumliche Relativposition zwischen Fahrzeug und Code, ermittelt Steuerungsgrößen zur autonomen Ansteuerung einer unter optischen Gesichtspunkten günstigeren Relativposition des Fahrzeugs in Bezug auf den Code und startet erst dann die aus dem Stand der Technik bekannte zweidimensionale optische Erfassung und Auswertung des Codes.
Die gemäß dem erfinderischen Verfahren ermittelten Steuergrößen werden in einer bevorzugten Ausführungsform unmittelbar an eine Antriebseinrichtung des Fahrzeuges ausgegeben. Das Fahrzeug steuert dann die ermittelte Position und Ausrichtung in Bezug auf den maschinenlesbaren Code autonom, d.h. ohne Mitwirkung eines menschlichen Bedieners, an. Alternativ hierzu ist aber auch die Ausgabe der Steuergrößen an eine Bedienoberfläche (MMI = Man Machine Interface) eines Endgerätes möglich, welche an den Fahrzeugbediener Navigationsweisungen zum Erreichen der ermittelten Position und Ausrichtung ausgibt.

Das erfinderische Grundkonzept sieht weiterhin vor, dass der erste Verfahrensabschnitt folgende Schritte umfasst:
▪ Empfang von Bilddaten von mindestens einer Kamera des optischen Bildverarbeitungssystems,
▪ Auswerten der Bilddaten auf das Vorhandensein von Farbmarken,
▪ Gruppierung von erkannten Farbmarken zu Farbmarkengruppen,
▪ Ermittlung der zweidimensionalen Koordinaten aller zu einer Farbmarkengruppe zugehörigen Farbmarken in einem der Kamera zugeordneten Koordinatensystem,
▪ Transformation der zweidimensionalen Koordinaten aller Farbmarken einer Farbmarkengruppe in ein dem Fahrzeug zugeordnetes dreidimensionales Koordinatensystem,
▪ Ermittlung der Flächennormale durch den Schwerpunkt der von den Farbmarken einer Farbmarkengruppe aufgespannten Fläche.

Zahlreiche aus dem Stand der Technik bekannte optoelektronisch verarbeitbare Codes weisen nach standardisierten Vorgaben aufgebaute Orientierungsmarken auf, welche zur korrekten zweidimensionalen Ausrichtung eines von einem solchen Code aufgenommenen Kamerabildes dienen. Durch diese Standards sind u.a. auch die Proportionen dieser Orientierungsmarken in Bezug auf Größe, Ausrichtung und relativen Abstand zueinander festgelegt. Die Erfindung schlägt nun vor, derartige maschinenlesbare Codes mit Farbmarken zu versehen, die an definierten Stellen des Codes angeordnet sind sowie definierte Proportionen in Bezug auf den Code und definierte Farben aufweisen. Hierbei ist für jeden Code eine Mehrzahl von Farbmarken in jeweils unterschiedlichen definierten Farben vorgesehen. Als besonders vorteilhaft hat sich dabei ein 3-Tupel von unterschiedlichen Farben herausgestellt. Die einzelnen Farbmarken eines Codes können in Orientierungsmarken integriert sein oder in sonstiger Weise in einer definierten geometrischen Beziehung zu Orientierungsmarken stehen. Alternativ hierzu ist aber auch eine von eventuellen Orientierungsmarken unabhängige Positionierung der Farbmarken innerhalb des Codes denkbar.
Gemäß dem erfinderischen Verfahren werden die von der Kamera des Bildverarbeitungssystems empfangenen Bilddaten fortlaufend auf das Vorliegen von Farbmarken ausgewertet. Erkannte Farbmarken werden anhand der ermittelten Farbe und der Code-spezifisch definierten Proportionen zu Farbmarkengruppen gruppiert, wobei jede Farbmarkengruppe einem n-Tupel von vordefinierten Farben entspricht. Gemäß der Erfindung sind also die Farbmarken eines jeden Codes mit jeweils einer unterschiedlichen Schlüsselfarbe markiert. Auf diese Weise ist eine wirksame Vorselektion der empfangenen Kamerabild-Daten möglich und es können zusätzliche Informationen über die logische und geometrische Zugehörigkeit sensorisch erkannter Farbmarken zu einzelnen Codes generiert werden. Als Farbmarke ist dabei eine punktförmige Ausdehnung gleichen Farbtons zu verstehen, die sich über mehrere Pixel erstrecken kann und von anderen Bildpunkten unterschieden werden kann. So müssen beispielsweise als gleichfarbig erkannte Farbmarken zu unterschiedlichen Codes gehören, während als verschiedenfarbig erkannte Farbmarken Bestandteile desselben Codes sein können, sofern ihre Abstände zueinander in Abhängigkeit zu ihren Proportionen ein definiertes Maß nicht überschreiten.

Im nächsten Teilschritt werden die zweidimensionalen Koordinaten aller zu einer gemeinsamen Farbmarkengruppe gehörigen Farbmarken ermittelt, wobei ein der Kamera zugeordnetes Koordinatensystem als Bezugssystem dient, und in einem weiteren Teilschritt in ein dem Trägerfahrzeug der Kamera zugeordnetes dreidimensionales Koordinatensystem transformiert. Hierzu wird die dreidimensionale Geometrie der durch die Farbmarkengruppe aufgespannten Ebene durch eine an sich bekannte Zentralprojektion aus den bekannten Positionen, Abmessungen und Orientierungen der Farbmarken im unverzerrten Code rekonstruiert und deren Ebenen-Gleichungen ermittelt. Aus dem Kreuzprodukt zweier diese Ebene aufspannender Vektoren wird in einem letzten Teilschritt zunächst der Normalenvektor und schließlich zusammen mit dem Flächenschwerpunkt die Flächennormale dieser Ebene ermittelt. Auf diese Weise ermöglicht das erfindungsgemäße Verfahren eine Ermittlung der dreidimensionalen Koordinaten sowie der Normale dieser Ebene. Bei einem in vorteilhafter Weise standardisierten Code sind die verschiedenen Farbmarken des Codes derart positioniert, dass die Flächennormale der von einer Farbmarkengruppe aufgespannten Ebene mit der Flächennormale der Trägerebene des Codes übereinstimmt.
Das erfindungsgemäße Verfahren sieht weiter vor, dass die Steuergrößen zur Navigation des Fahrzeuges derart an das Fahrzeug ausgegeben werden, dass dieses bzw. die auf diesem Fahrzeug montierte Kamera in eine Position geführt wird, die innerhalb eines kegelförmigen Raumbereiches liegt, wobei die Achse des Kegels durch die Flächennormale der Trägerebene definiert ist. Der Öffnungswinkel und die Höhe des Kegels sind hingegen durch die optischen Parameter der Kamera bestimmt; d.h. sie entsprechen den Werten, innerhalb denen das Auflösungsvermögen der Kamera hinsichtlich Winkelabweichung und Entfernung zur Erkennung des Codes ausreicht.
Somit wird das Fahrzeug auf einen Kurs gebracht, der zu einem Raumbereich hinführt, in dem das Auslesen des codierten Inhalts mittels des optischen Bildverarbeitungssystems möglich ist.

Es ist in diesem Zusammenhang besonders vorteilhaft, wenn zur Auswertung der Bilddaten mindestens eine Bitmaske erstellt wird, welche auf in den Farbmarken enthaltene Schlüsselfarben abgestimmt ist. Die Verwendung von Schlüsselfarben dient zum optischen Freistellen der Farbmarken gegenüber dem Hintergrund und den restlichen Teiles des Codes. Die Kamera und das Freistellungverfahren muss daher durch Messreihen kalibriert werden; so muss bei der Kamera ein Weißabgleich durchgeführt werden und die Schwellwerte für eine Freistellung auf die im Testbild gemessenen Farbtöne, inklusive einer Toleranz von ca. plus/minus 2-3% eingestellt werden. Umgebungsabhängig muss auch im laufenden Betrieb ein Weißabgleich zur Lichtfarbe erfolgen, z.B. zur Korrektur des zeitabhängigen Sonnenfarbe oder der Deckenbeleuchtung, da die von der Kamera erfasste Farbe durch subtraktive Farbmischung der Farbmarken mit der Beleuchtung entsteht. Zudem muss das Freistellungverfahren zur Verringerung von Messfehlern Bildteile mit einer geringen Farbsättigung oder Helligkeit (unter 15-25%) freistellen. Die Einstellung der Toleranz und Schwellwerte darf nicht zu gering sein, da die Farben nicht zwangsläufig direkt gemessen werden, sondern bei geringer Auflösung durch additive Farbmischung der Abbildung innerhalb den einzelnen von der Kamera aufgenommenen Pixeln auch Mischtöne mit den weißen und schwarzen Bildelementen in der unmittelbaren Umgebung der Farbmarke im Code entstehen. Andererseits darf aber auch die Einstellung der Toleranz- und Schwellwerte nicht zu hoch ausfallen, um die Bildelementen mit der notwendigen Schärfe identifizieren zu können.

Gemäß einer sinnvollen Weiterentwicklung der Erfindung wird die Farbmarkengruppe zusätzlich bezüglich einer codierten Zusatzinformation ausgewertet. Auf diese Weise können potentiell relevante Codes aus einer Vielzahl vorhandener Codes unterschieden werden, ohne deren Inhalt lesen zu müssen. Das ist insbesondere dann von Vorteil wenn bei Anwendung des Verfahrens mehrere Codes erkannt wurden, zu deren Auslesen das Fahrzeug aber in unterschiedliche Richtungen zu steuern wäre. Durch das farbgestützte Codieren einer Zusatzinformation wie beispielsweise einer Klassifikation o.ä. können unnötige Fahrwege vermieden werden.

Ein wesentlicher Anwendungsfall des erfindungsgemäßen Verfahrens sieht vor, dass im zweiten Verfahrensschritt Steuergrößen für die Ansteuerung einer Andockposition an einer stationären oder mobilen Trägervorrichtung, auf der der Code aufgebracht ist, an das Fahrzeug übertragen werden. In besonders vorteilhafter Weise sieht die Erfindung dabei vor, dass das erfindungsgemäße Verfahren zum Andocken einer Drohne auf dem mit einem Code versehenen Dach eines Straßenfahrzeuges eingesetzt wird. Auf diese Weise können Systeme geschaffen werden, bei denen Drohnen über größere Wegstrecken hinweg von anderen (Straßen-) Fahrzeugen mitgenommen werden, bevor die Drohnen dann die jeweils verbleibenden Reststrecken zu ihren Bestimmungsorten mit eigenem Antrieb zurücklegen. Für die Drohnen können beispielsweise Andock-Stationen auf den Fahrzeugdächern spezieller Fahrzeuge, wie z.B. Omnibussen im Linienbetrieb oder Speditions-Lastkraftwagen auf vorgeplanten Routen, vorgesehen sein, wobei die Identität der jeweiligen Fahrzeuge durch zweidimensionale Codes auf den Fahrzeugdächern angegeben ist. Durch derartige Mitfahrgelegenheiten lassen sich die aus Gewichtsgründen beschränkten Energie-Ressourcen von Drohnen schonen. Auf diese Weise kann der Wirkungsradius von Drohnen deutlich erweitert werden.

Eine mögliche Ausgestaltung des Erfindungskonzeptes sieht vor, dass der Code als zweidimensionaler QR-Code ausgeführt ist. Derartige QR-Codes sind weit verbreitet und sind wegen ihren standardisierten Eigenschaften in bestehenden Systemen nutzbar. Insbesondere können die Farbmarken in die Orientierungsmarken des QR-Codes integriert werden. Für die Anwendung des erfindungsgemäßen Verfahrens eignet sich in besonders vorteilhafter Weise ein QR-Code, dessen Farbmarken jeweils einen 3 x 3 Elemente großen, inneren Teil einer Orientierungsmarke des QR-Codes bilden, wobei jede Farbmarke in einer zu den übrigen Farbmarken desselben QR-Codes unterscheidbaren Schlüsselfarbe mit jeweils voller Farbsättigung eingefärbt ist.Zudem ist die Anordnung der unterschiedlich gefärbten Farbmarken zueinander innerhalb eines jeden QR-Codes identisch. Die übrigen Bestandteile des QR-Codes außerhalb der Farbmarke umfassen idealerweise nur schwarz oder weiß gefärbte Elemente. Die Abmessung des QR-Codes soll möglichst wenig Elemente umfassen, und idealerweise auf 21x21 Elemente begrenzt sein. Auf diese Weise sind die Abmessungen der Orientierungsmarken im Verhältnis zum Code maximal.
Um den QR-Code herum sollte eine Fläche frei von Farben (außer Grautönen) bleiben, um in Fällen von optischen Überlagerungen oder bei einer Verwendung der Schlüsselfarben außerhalb des QR-Codes die Ermittlung der Farbgruppen oder Flächennormalen zu verbessern. Es hat sich als sinnvoll herausgestellt, wenn die Breite dieser Freifläche mindestens sieben Elementen entspricht.

Zur Kodierung einer Zusatzinformation in einem solchen QR-Code sind zwei Alternativen denkbar.
Gemäß einer ersten Ausführungsvariante ist ein QR-Code horizontal und vertikal in möglichst gleich große Segmente unterteilt, wobei die Farbmarken in jeweils einem dieser Segmente angeordnet sind. Mittels weiterer Schlüsselfarben, die von den Schlüsselfarben der Farbmarken abweichen, sind Zusatzinformationen in den übrigen Segmenten, die keine Farbmarken aufweisen, codierbar.
Hierzu alternativ ist die Anbringung eines zusätzlichen Codes an einer exakt definierten Position neben oder im räumlichen Umfeld außerhalb des QR-Codes denkbar, wobei dessen Elemente so dimensioniert sind, dass dieser zusätzliche Code aus großer Entfernung lesbar ist.
In beiden Alternativen ist das Bild vor der Auswertung des zusätzlichen Farbcodes anhand der mittels des erfindungsgemäßen Verfahrens ermittelten Ebenen-Gleichungen zu transformieren, so dass ein zeilenorientierter Scan des Farbmusters möglich ist. Hierzu wird die Position eines jeden Segmentes durch Interpolation der Koordinaten der erkannten Farbmarken ermittelt sowie die Färbung jedes Segments bestimmt und auf Übereinstimmung mit einer Schlüsselfarbe überprüft. Da sich der Messbereich eines jeden Segments über mehrere Pixel bzw. Elemente erstrecken kann, wird die Färbung des Segmentes durch Berechnung des Mittelwertes bestimmt.

Es ist in diesem Zusammenhang vorteilhaft, wenn eine oder jede Farbmarke lichtemittierend, zum Beispiel als Lichtquelle, ausgelegt ist. So entfallen die oben genannten Probleme mit der subtraktiven Farbmischung. Zudem lässt sich additive Farbmischung bei intensiven Lichtquellen zugunsten der Farberkennung beeinflussen, da die Gewichtung eine Rolle spielt. Zudem wird der Einsatz des erfindungsgemäßen Verfahrens unter schlechten Sichtbedingungen, z.B. bei Nacht, verbessert. Für einen Einsatz im Zusammenhang mit Drohnen oder anderen Fahrzeuge reichen die als Lichtquellen realisierten Farbmarken aus, um zur Leseposition zu navigieren. Die Beleuchtung des Codes könnte in diesem Fall durch ein handelsübliches System mit Bewegungsmelder, der im Lesebereich eine solche Annäherung bemerkt, aktiviert werden.

In vorrichtungsorientierter Weise sieht die Erfindung eine gattungsgemäße Steuerungsvorrichtung eines Fahrzeuges vor, welche zusätzlich ein Bildverarbeitungssystem umfasst, das ausgehend von den von der digitalen Kamera erfassten Bildern des Codes zur Ermittlung der dreidimensionalen räumlichen Lage der Trägerebene des Codes in Bezug auf das Fahrzeug eingerichtet ist, sowie eine Steuereinheit umfasst, die zur hierauf basierenden Ermittlung von Steuergrößen zur Navigation des Fahrzeuges in Richtung auf den Code eingerichtet ist.
Ebenso umfasst die Erfindung ein mit einer solchen Steuerungsvorrichtung ausgerüstetes Fahrzeug. Es kann sich hierbei um Straßen-, Luft-, Wasser- oder Schienenfahrzeuge handeln.

Die vorliegende Erfindung wird nachfolgend anhand eines Ausführungsbeispieles und dazugehöriger Zeichnungen näher erläutert. Es zeigen:
Figur 1: Prinzipdarstellung einer erfindungsgemäßen Steuerungsvorrichtung für ein Fahrzeug
Figur 2: Schematische Darstellung der Arbeitsbereiche der Auswertungseinheiten
Figur 3: Schematischer Aufbau eines zur Durchführung des erfindungsgemäßen Verfahrens eingerichteten QR-Codes
Figur 4: Schematischer Aufbau eines QR-Codes mit Zusatzinformation
Figur 5: Beispiel für die resultierende Färbung eines QR-Codes

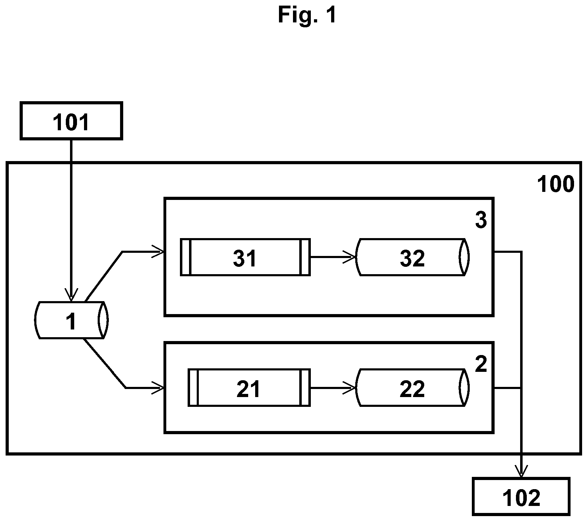

Figur 1 zeigt die Prinzipdarstellung einer erfindungsgemäßen Steuerungsvorrichtung für ein Fahrzeug mit einem Bildverarbeitungssystem (100). Die von einer digitalen Kamera (101) erfassten und in einem Bild-Speicher (1) zwischengespeicherten Bilder eines QR-Codes können wahlweise einer ersten Auswertungseinheit (2) des Bildverarbeitungssystems oder einer zweiten Auswertungseinheit (3) des Bildverarbeitungssystems zugeführt werden. Während die erste Auswertungseinheit (2) in herkömmlicher und aus dem Stand der Technik vorbekannter Weise einen Scanner (21) zur zweidimensionalen Auswertung des von der Kamera erfassten QR-Codes aufweist und den hieraus ermittelten Inhalt in einen Inhaltsspeicher (22) zwischenspeichert, umfasst die erfindungsgemäße zweite Auswertungseinheit (3) eine Einrichtung (31) zur dreidimensionalen Bildauswertung sowie einen Speicher (32) zur Ablage der hieraus ermittelten dreidimensionalen Lageinformationen der von der Kamera erfassten QR-Codes. Die Inhalte beider Speicher (22, 32) werden an nachgelagerte Einrichtungen wie beispielsweise das Navigationssystem (102) des Fahrzeuges oder Steuersysteme für sonstige Fahrzeugfunktionen übergeben. Gegenüber dem vorbekannten Stand der Technik ist die Steuerungsvorrichtung derart erweitert, dass neben der herkömmlichen zweidimensionalen Bildauswertung zum Zwecke der zweidimensionalen Code-Auswertung auch eine dreidimensionale Bildauswertung zur Lokalisierung und relativen dreidimensionalen Lagebestimmung von Codes durchführbar ist.

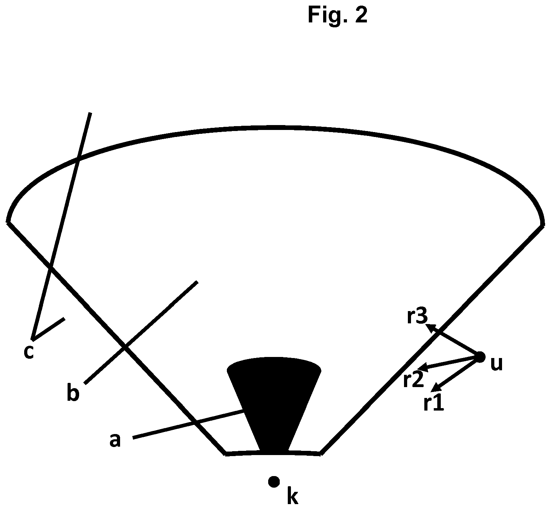

Figur 2 zeigt schematisch die Arbeitsbereiche (a, b) der beiden Auswertungseinheiten (2, 3). Der Inhalt eines Codes (k) kann von der ersten Auswertungseinheit (2) ausgewertet werden, wenn er innerhalb des Lesebereiches (a) von der Kamera (101) erfasst wird. Die zweite Auswertungseinheit (3) kann eine Auswertung der dreidimensionalen Lage vornehmen, wenn der Code (k) innerhalb des Lageerkennungsbereichs (b) von der Kamera (101) erfasst wird. Der Lesebereich (a) ist räumlich allerdings sehr eng begrenzt. Somit bestehen hohe Anforderungen an die Positionierungsgenauigkeit des Fahrzeuges bezüglich des Codes (k). Die Erfindung bietet ein Verfahren bzw. eine Vorrichtung an, mittels der ein Fahrzeug ausgehend von einer Position außerhalb des Lesebereiches (a), aber innerhalb des Lageerkennungsbereiches (b), zu einer Position gelangen kann, aus der heraus ein maschinelles Auslesen des Codes möglich ist. Außerhalb dieser beiden Bereiche, im Annäherungsbereich (c), d.h. außerhalb der beiden Arbeitsbereich (a, b) kann keine der beiden Auswertungseinheiten eine Auswertung vornehmen. Sofern sich das Fahrzeug an einer ungünstigen Kameraposition (u) befindet, würde das Fahrzeug gemäß des vorbekannten Standes der Technik versuchen, in direkter Richtung (r1) oder alternativer Richtung (r2) näher an den Code (k) und damit in eine zum Lesen des Codes geeignete Position innerhalb des Lesebereiches (a) zu gelangen. Da die Positionslage des Kodes (k) und damit auch die Lage des Lesebereiches (a) aber in der Regel nicht hinreichend genaubekannt sind, ist in vielen Fällen auch nach derartigen Annäherungsbewegungen noch keine Position erreicht, in der der Code maschinell lesbar wäre. Da der Lesebereich (a) vollständig in den deutlich größeren Lageerkennungsbereich (b) fällt, ist es jedoch effizienter, zunächst in eine Richtung (r3) zum Lageerkennungsbereich (b) einzuschlagen und von dort aus in erfindungsgemäßer Weise zum Lesebereich (a) zu navigieren.

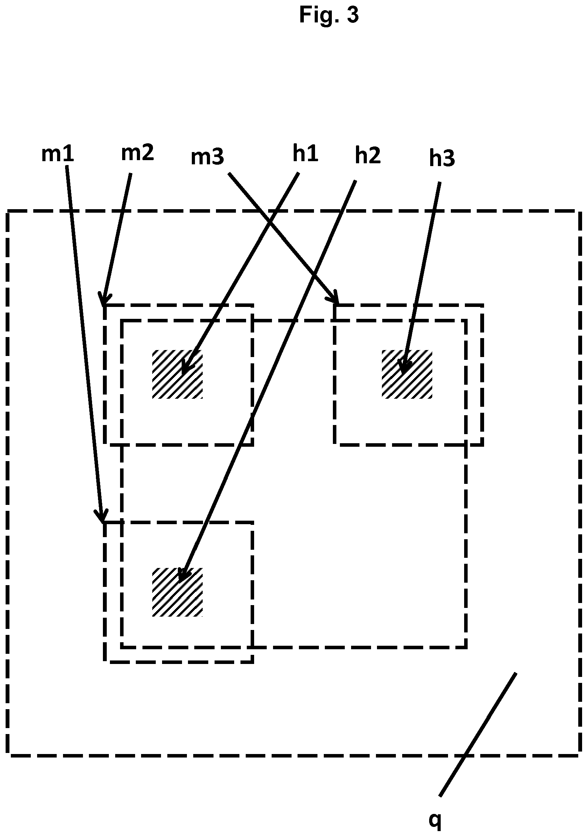

Figur 3 zeigt einen zur Durchführung des Verfahrens eingerichteten QR-Code. Als Grundlage wird ein schwarz-weißer QR-Code mit 21x21 Elementen gewählt, welcher drei Orientierungsmarken (m1, m2, m3) aufweist, wobei jede Orientierungsmarke aus grafischen Elementen (Pixel, Punkten o.ä.) besteht, die zeilenförmig im Verhältnis 1:1:1:3:1:1:1 angeordnet sind. Jede Orientierungsmarke weist einen innenliegenden Bereich mit einer Höhe bzw. Breite von jeweils drei Elementen auf, der mit je einer Farbmarke (h1, h2, h3) versehen ist, wobei jede Farbmarke eine unterschiedliche Schlüsselfarbe aufweist. Die Schlüsselfarben weisen eine hohe Sättigung und Intensität auf. Die Farbmarken weisen folgende Schlüsselfarben auf (Darstellung im HSV-Farbmodell, wobei der Wert "255" hier 100% entspricht):
h1: rot (0/255/255),
h2: grün (85/255/255),
h3: blau (170/255/255)

Es ist nicht die gesamte Orientierungsmarke eingefärbt, damit zu intensive Farbtonvermischungen bei der Abbildung im Bild vermieden werden.

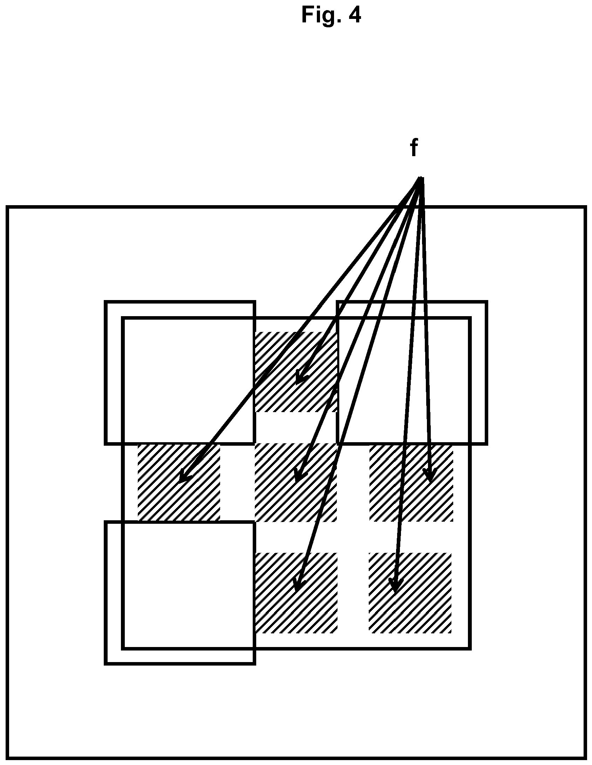

Figur 4 zeigt in Ergänzung zu Figur 3 die farbliche Kodierung einer Zusatzinformation in einem zur Durchführung des erfindungsgemäßen Verfahrens eingerichteten QR-Code. Dieser QR-Code weist in Ergänzung zu den Orientierungsmarken (m1, m2, m3) eine Mehrzahl von Segmenten (f) auf, die für die Zusatzcodierung geeignet sind und im Kontext dieses Ausführungsbeispiels eine Größe von 5 x 5 Elementen aufweisen. Zur Codierung von Zusatzinformationen werden die in diesen Segmenten angeordneten Elemente mit einer weiteren Schlüsselfarbe markiert. Zur Vermeidung von zu intensiven Farbtonvermischungen bei der späteren Abbildung im Bild sind die außen um jedes Segment (f) herum angeordneten Elemente nicht gefärbt.

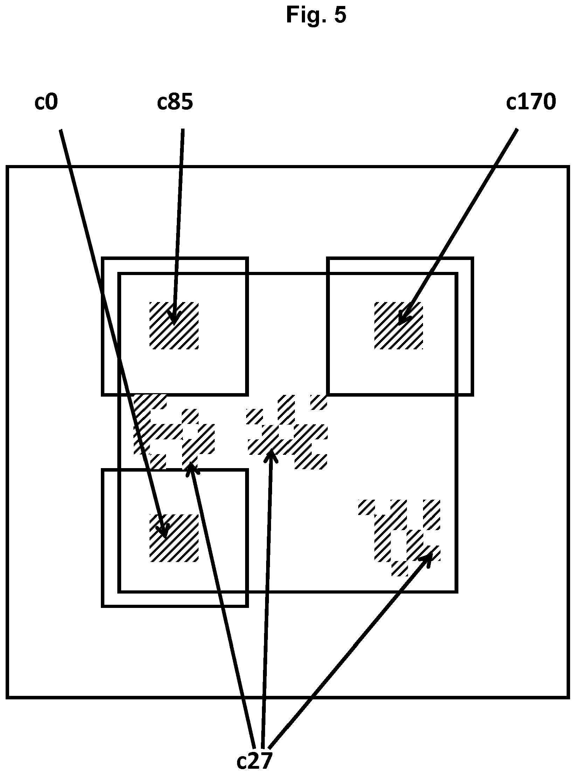

Figur 5 zeigt beispielhaft einen QR-Code, dessen Orientierungsmarken mit Farbmarken in den Farben rot (c0), grün (c85) und blau (c170) ausgeführt sind. Zusätzlich sind die Elemente in den übrigen Segmenten mit einer weiteren Schlüsselfarbe "orange" (= Farbwert 27/255/255) markiert. Bei frontaler Annäherung eines Fahrzeuges aus dem Lageerkennungsbereich (b) an den Code (k) wird dieser von der Kamera (101) des Fahrzeuges zunächst sehr klein im Bild dargestellt. Die tabellarische Notation eines auf die Orientierungsmarke (m1) gerichteten Bildausschnitts (wobei die beiden anderen Orientierungsmarken (m2, m3) für die Zwecke dieses Beispiels außerhalb des Bildausschnittes liegen) lautet (im RGB-Modus):

| | A | B | C |
|---|---|---|---|
| 1 | 187/182/182 | 176/145/134 | 182/181/180 |
| 2 | 169/142/144 | 210/78/84 | 153/154/155 |
| 3 | 207/207/207 | 192/193/192 | 201/201/201 |

Diese werden in das HSV-Farbmodell transformiert:

| | A | B | C |
|---|---|---|---|
| 1 | 0/7/187 | 11/61/176 | 21/3/182 |
| 2 | 252/41/169 | 253/160/210 | 149/3/155 |
| 3 | 0/0/207 | 85/1/193 | 0/0/201 |

Unter Anwendung der nachfolgenden Toleranzen und Schwellenwerte
▪ H: 251 bis 255 oder 0 bis 5 (knapp 2% Toleranz). Es ist zu beachten, dass es sich hierbei um einen Farbkreis handelt, d.h. der Farbtonwert 255 entspricht -1.
▪ S: 48 bis 255 (knapp 20%)
▪ V: 48 bis 255 (knapp 20%)
ergibt sich folgende Bitmaske:

| | A | B | C |
|---|---|---|---|
| 1 | 0 | 0 | 0 |
| 2 | 0 | 1 | 0 |
| 3 | 0 | 0 | 0 |

Die Orientierungsmarke (m1) aus dem Bildausschnitt wurde somit vollständig auf den Pixel in Zeile 2, Spalte B abgebildet. Durch die additive Farbmischung entsteht ein Farbton der im Beispiel innerhalb der Toleranz liegt, doch in Zeile 2, Spalte A, ergibt sich Farbton der mit dem Wert 252 auch noch innerhalb der Toleranz liegt und nur durch die geringe Sättigung ausgeschlossen wird. Die Schwellwerte und Toleranzen sind für die scharfe Abgrenzung der Bildpunkte für Erkennung der Orientierungsmarken (m1, m2, m3) aus Figur 3 wichtig; im Gegensatz dazu wird eine kodierte Information aus den entsprechend Figur 4 gefärbten inneren Teilen der Segmente (f) nicht durch Abgrenzung bestimmt.

Um den Code-Inhalt oder eine Zusatzinformation im Kode auslesen zu können, muss das Fahrzeug zunächst aus dem in Figur 2 beschriebenen Lageerkennungsbereich (b) in den Lesebereich (c) bewegt werden bzw. der Code als relevant erkannt werden. Hierzu wird die Lage aus den eben erkannten Bildpunkten der Orientierungsmarken im Kamerabild verwendet um 2D Vektoren zu definieren. Aus den Bildpunkten entsprechend Figur 4:
▪ von Grün (c85) zu Rot (c0),
▪ von Grün (c85) zu Blau (c170).
Anhand dieser zweidimensionalen Vektoren, der Kenntnis über die physikalische Abmessung des Kodes, insbesondere der gleiche Vektorenlänge, und dem Projektionsverhalten des Kamerasystems werden mathematisch die Ebenen-Gleichungen und der Normale des Codes auf der Trägerebene ermittelt. Diese Information kann dem Navigationssystem übermittelt werden, bzw. zur Auswertung der Zusatz-Information im Kode genutzt werden.

Zur Auswertung der Zusatzinformation wird an jeder Stelle des QR-Codes, an der ein Segment (f) zu erwarten ist, eine Spot-Messung der Färbung durchgeführt. Die Position der Spotmessung ergibt sich durch die Interpolation der Lagen der die Orientierungsmarken abbildenden Bildpunkte. In Abhängigkeit vom konkret codierten Inhalt können sich Kodierungen ergeben, die zu wenige in der Schlüsselfarbe gefärbte Element je Segment aufweisen. Es hat sich in diesem Kontext deshalb als zweckmäßig erwiesen, wenn mindestens ein Drittel der Elemente je Segment gefärbt ist. Andernfalls muss der Code-Inhalt geändert werden.

### Bezugszeichenliste:

1 Bildspeicher
2 Erste Auswertungseinheit
21 2D-Scanner
22 Speicher für Code-Inhalt
3 Zweite Auswertungseinheit
31 3D-Bildauswertung
32 Speicher für 3D-Code-Lage
100 Steuerungsvorrichtung
101 Kamera
102 Navigationssystem
k Kode Position
a Lesebereich für 2D-Scanner (21)
b Lageerkennungsbereich für 3D-Bildauswertung (31)
c Annäherungsbereich außerhalb eines Auswertungsbereichs (21,31)
u ungünstige Kameraposition im Annäherungsbereich (c)
r1 direkte Richtung von ungünstiger Kameraposition (u) zum Kode (k)
r2 alternative Richtung von ungünstiger Kameraposition (u) zum Lesebereich (a)
r3 optimale Richtung zur Lageerkennung von Kode (k)
m1, m2, m3 Orientierungsmarken eines QR Codes
h1, h2, h3 Farbmarken
q Ruhezone um den QR-Code herum
f innerer Teil der zu färbende Segmente
c0 rote Farbmarkierung
c85 grüne Farbmarkierung
c170 blaue Farbmarkierung
c27 orange Farbmarkierung

## Patentansprüche

1. Verfahren zur Steuerung eines Fahrzeuges, welches mit einer digitalen Kamera (101) und einem optischen Bildverarbeitungssystem (100) ausgestattet ist, wobei das optische Bildverarbeitungssystem zur Erfassung und Auswertung eines auf einer zweidimensionalen Trägerebene aufgebrachten maschinenlesbaren Codes eingerichtet ist,
**dadurch gekennzeichnet, dass**
in einem ersten Verfahrensschritt aus den von der digitalen Kamera (101) erfassten Bildern des Codes mittels des Bildverarbeitungssystems (100) die dreidimensionale räumliche Lage der Trägerebene des Codes in Bezug auf das Fahrzeug ermittelt wird,
und hierauf basierend in einem zweiten Verfahrensschritt durch eine mit dem Bildverarbeitungssystem in Verbindung stehende Steuereinheit (102) Steuergrößen zur Navigation des Fahrzeuges in Richtung auf den Code ermittelt werden.

2. Verfahren zur Steuerung eines Fahrzeuges nach Patentanspruch 1, **dadurch gekennzeichnet, dass** der erste Verfahrensabschnitt folgende Schritte umfasst:
▪ Empfang von Bilddaten von mindestens einer Kamera (101) des optischen Bildverarbeitungssystems,
▪ Auswerten der Bilddaten auf das Vorhandensein von Farbmarken,
▪ Gruppierung von erkannten Farbmarken zu Farbmarkengruppen,
▪ Ermittlung der zweidimensionalen Koordinaten aller zu einer Farbmarkengruppe zugehörigen Farbmarken in einem der Kamera zugeordneten Koordinatensystem,
▪ Transformation der zweidimensionalen Koordinaten aller Farbmarken einer Farbmarkengruppein ein dem Fahrzeug zugeordnetes dreidimensionales Koordinatensystem,
▪ Ermittlung der Flächennormale durch den Schwerpunkt der von den Farbmarken einer Farbmarkengruppe aufgespannten Fläche.

3. Verfahren zur Steuerung eines Fahrzeuges nach Patentanspruch 2, **dadurch gekennzeichnet, dass** zur Auswertung der Bilddaten mindestens eine Bitmaske erstellt wird, welche auf in den Farbmarken enthaltene Schlüsselfarben abgestimmt ist.

4. Verfahren zur Steuerung eines Fahrzeuges nach einem der Patentansprüche 2 oder 3, **dadurch gekennzeichnet, dass** die Farbmarkengruppe bezüglich einer codierten Zusatzinformation ausgewertet wird.

5. Verfahren zur Steuerung eines Fahrzeuges nach einem der Patentansprüche 1 bis 4, **dadurch gekennzeichnet, dass** im zweiten Verfahrensschritt Steuergrößen für die Ansteuerung einer Andockposition an einer stationären oder mobilen Trägervorrichtung, auf der der Code aufgebracht ist, an das Fahrzeug übertragen werden.

6. Verfahren zur Steuerung eines Fahrzeuges nach Patentanspruch 5, **dadurch gekennzeichnet, dass** das Verfahren zum Andocken einer Drohne auf dem mit einem Code versehenen Dach eines Straßenfahrzeuges eingesetzt wird.

7. Verfahren zur Steuerung eines Fahrzeuges nach einem der Patentansprüche 1 bis 6, **dadurch gekennzeichnet, dass** der Code als zweidimensionaler QR-Code ausgeführt ist.

8. Verfahren zur Steuerung eines Fahrzeuges nach einem der Patentansprüche 2 bis 7, **dadurch gekennzeichnet, dass** die oder jede Farbmarke lichtemittierend ausgeführt ist.

9. Steuerungsvorrichtung eines Fahrzeuges, umfassend eine digitale Kamera (101) und ein optisches Bildverarbeitungssystem (2, 21, 22), welches zur Erfassung und Auswertung eines auf einer zweidimensionalen Trägerebene aufgebrachten maschinenlesbaren Codes eingerichtet ist, **dadurch gekennzeichnet, dass** die Steuerungsvorrichtung ferner ein Bildverarbeitungssystem (3, 31, 32) umfasst, welches ausgehend von den von der digitalen Kamera (101) erfassten Bildern des Codes zur Ermittlung der dreidimensionalen räumlichen Lage der Trägerebene des Codes in Bezug auf das Fahrzeug eingerichtet ist, sowie eine Steuereinheit (102) umfasst, welche zur hierauf basierenden Ermittlung von Steuergrößen zur Navigation des Fahrzeuges in Richtung auf den Code eingerichtet ist.

10. Fahrzeug mit einer Steuerungsvorrichtung nach Patentanspruch 9.

## Claims

1. Method for controlling a vehicle which is equipped with a digital camera (101) and an optical image processing system (100), wherein the optical image processing system is configured to detect and evaluate a machine-readable code applied to a two-dimensional carrier plane,
**characterised in that**
in a first method step, the three-dimensional spatial position of the carrier plane of the code in relation to the vehicle is determined, via the optical image processing system (100), from the images of the code detected by the digital camera (101),
and based thereon, in a second method step, control parameters for navigating the vehicle in the direction of the code are determined by a control unit (102) which is connected to the image processing system.

2. Method for controlling a vehicle according to claim 1, **characterised in that** the first portion of the method comprises the following steps:
- receiving image data from at least one camera (101) of the optical image processing system,
- evaluating the image data for the presence of colour marks,
- grouping detected colour marks into colour mark groups,
- determining the two-dimensional coordinates of all colour marks belonging to a colour mark group in a coordinate system associated with the camera,
- transforming the two-dimensional coordinates of all colour marks of a colour mark group into a three-dimensional coordinate system associated with the vehicle,
- determining the surface normal through the centre of the surface defined by the colour marks of a colour mark group.

3. Method for controlling a vehicle according to claim 2, **characterised in that** at least one bit mask which is coordinated with key colours contained in the colour marks is created for evaluating the image data.

4. Method for controlling a vehicle according to either claim 2 or 3, **characterised in that** the colour mark group is evaluated in relation to a coded additional information item.

5. Method for controlling a vehicle according to any one of claims 1 to 4, **characterised in that** in the second method step, control parameters for controlling a docking position at a stationary or mobile carrier device to which the code is applied are transferred to the vehicle.

6. Method for controlling a vehicle according to claim 5, **characterised in that** the method is used for docking a drone on the roof of a road vehicle provided with a code.

7. Method for controlling a vehicle according to any one of claims 1 to 6, **characterised in that** the code is in the form of a two-dimensional QR code.

8. Method for controlling a vehicle according to any one of claims 2 to 7, **characterised in that** the or each colour mark is constructed to emit light.

9. Control device of a vehicle, comprising a digital camera (101) and an optical image processing system (2, 21, 22) which is configured to detect and evaluate a machine-readable code applied to a two-dimensional carrier plane, **characterised in that** the control device further comprises an image processing system (3, 31, 32) which is configured to determine the three-dimensional spatial position of the carrier plane of the code in relation to the vehicle based on the images of the code detected by the digital camera (101), and comprises a control unit (102) which is configured to determine in a manner based thereon control parameters for navigating the vehicle in the direction of the code.

10. Vehicle having a control device according to claim 9.

## Revendications

1. Procédé pour la commande d'un véhicule, qui est équipé d'une caméra numérique (101) et d'un système de traitement d'image optique (100), dans lequel le système de traitement d'image optique est aménagé pour la capture et l'évaluation d'un code lisible par machine appliqué sur un plan support bidimensionnel,
**caractérisé en ce que**
dans une première étape de procédé, la position spatiale tridimensionnelle du plan support du code est déterminée par rapport au véhicule à partir des images du code capturées par la caméra numérique (101) au moyen du système de traitement d'image (100),
et sur cette base dans une deuxième étape de procédé des grandeurs de commande pour la navigation du véhicule en direction du code sont déterminées par une unité de commande (102) communiquant avec le système de traitement d'image.

2. Procédé pour la commande d'un véhicule selon la revendication 1, **caractérisé en ce que** la première étape de procédé comprend les étapes suivantes :
- réception de données d'image par au moins une caméra (101) du système de traitement d'image optique,
- évaluation des données d'image quant à la présence de marques de couleur,
- regroupement de marques de couleur détectées en groupes de marques de couleur,
- détermination des coordonnées bidimensionnelles de toutes les marques de couleur appartenant à un groupe de marques de couleur dans un système de coordonnées associé à la caméra,
- transformation des coordonnées bidimensionnelles de toutes les marques de couleur d'un groupe de marques de couleur en un système de coordonnées tridimensionnel associé au véhicule,
- détermination de la normale à la surface par le point de gravité de la surface définie par les marques de couleur d'un groupe de marques de couleur.

3. Procédé pour la commande d'un véhicule selon la revendication 2, **caractérisé en ce qu'**au moins un masque de bit, qui est accordé sur des couleurs clé contenues dans les marques de couleur, est établi pour l'évaluation des données d'image.

4. Procédé pour la commande d'un véhicule selon l'une quelconque des revendications 2 ou 3, **caractérisé en ce que** le groupe de marques de couleur est évalué par rapport à une information supplémentaire codée.

5. Procédé pour la commande d'un véhicule selon l'une quelconque des revendications 1 à 4, **caractérisé en ce que** dans la deuxième étape de procédé, des grandeurs de commande pour la commande d'une position d'accostage au niveau d'un dispositif support stationnaire ou mobile, sur lequel le code est appliqué, sont transmises au véhicule.

6. Procédé pour la commande d'un véhicule selon la revendication 5, **caractérisé en ce que** le procédé est utilisé pour l'accostage d'un drone sur le toit d'un véhicule routier doté d'un code.

7. Procédé pour la commande d'un véhicule selon l'une quelconque des revendications 1 à 6, **caractérisé en ce que** le code est réalisé en tant que code QR bidimensionnel.

8. Procédé pour la commande d'un véhicule selon l'une quelconque des revendications 2 à 7, **caractérisé en ce que** la ou chaque marque de couleur est réalisée de manière à pouvoir émettre de la lumière.

9. Dispositif de commande d'un véhicule, comprenant une caméra numérique (101) et un système de traitement d'image optique (2, 21, 22), qui est aménagé pour la capture et l'évaluation d'un code lisible par machine appliqué sur un plan support bidimensionnel, **caractérisé en ce que** le dispositif de commande comprend en outre un système de traitement d'image (3, 31, 32), qui est aménagé pour la détermination de la position spatiale tridimensionnelle du plan support du code par rapport au véhicule à partir des images du code capturées par la caméra numérique (101), et comprend une unité de commande (102), qui est aménagée pour déterminer sur cette base des grandeurs de commande pour la navigation du véhicule en direction du code.

10. Véhicule avec un dispositif de commande selon la revendication 9.
